(19) Europäisches Patentamt
European Patent Office
Office européen des brevets

(11) Publication number: **0 055 891**
**B1**

(12) **EUROPEAN PATENT SPECIFICATION**

(45) Date of publication of patent specification: **25.07.84**

(51) Int. Cl.³: **F 16 L 47/02, B 29 C 27/02**

(21) Application number: **81305383.2**

(22) Date of filing: **13.11.81**

(54) Method of manufacture of a heat sealable fitting and fitting made by such method.

(30) Priority: **06.01.81 GB 8100265**

(43) Date of publication of application:
**14.07.82 Bulletin 82/28**

(45) Publication of the grant of the patent:
**25.07.84 Bulletin 84/30**

(84) Designated Contracting States:
**BE DE FR IT NL**

(56) References cited:
**AT - B - 358 886**
**AT - B - 360 293**

(73) Proprietor: **British Gas Corporation**
**Rivermill House 152 Grosvenor Road**
**London SW1V 3JL (GB)**

(73) Proprietor: **Vulcathene Glynwed Tubes and Fittings Ltd.**
**Bessemer Road**
**Welwyn Garden City Herts (GB)**

(72) Inventor: **Ewen, Alexander**
**35 Shooters Drive Nazeing**
**Essex (GB)**
Inventor: **Maine, Leslie**
**Forres Place Parkside Dale**
**Cramlington Northumberland (GB)**

(74) Representative: **Wallace, Walter**
**British Gas Corporation Patents Department 326 High Holborn**
**London, WC1V 7PT (GB)**

Courier Press, Leamington Spa, England.

## Description

This invention relates to tubular fittings for making connections by heat sealing to tubing or pipes and to methods of manufacture or such fittings.

In the installation of service pipes for the supply of gases it is essential to make a perfect seal at joints in the pipe or between pipes and fittings. One method of making such connections is to use thermoplastic materials which are heated until they fuse to the fitting or pipe to be joined. In one prior art method a tubular jointing fitting was constructed with an integral heater wire. The fitting of thermoplastic material was placed over the ends of two lengths of pipe to be joined and the heater wire coupled to a power supply. The thermoplastic material softened and formed a bond with the material of the service pipes.

One method of manufacture of such fittings is described in GB—A—1 373 761. A pair of steel bands were placed on a mandrel and a helix of resistance wire was wound between them and its ends connected thereto. A ribbon of thermoplastic tape from an extruder was then wound round the helix of resistance wire and mandrel and a predetermined thickness of thermoplastic material built up. Preferably, the thermoplastic tape was stretched as it was wound so that it was pre-stressed and would shrink on to a pipe when the resistance wire was heated. Finally the complete fitting was removed from the mandrel.

In another method of manufacture described in GB—A—1 440 713 a heater wire was wound in a helical thread on a thermoplastic preform and a thermoplastic jacket subsequently moulded to hold it in position. Stress was then applied by forcing the fitting over a tapered mandrel.

The first method suffers from the disadvantage that the method of prestressing the fitting by stretching the thermoplastic tape is extremely sensitive to variations in the mechanical properties of the thermoplastic material whilst the second method demands an additional prestressing step after the fitting has been manufactured.

In order to overcome these and other disadvantage, an improved method of manufacture of heat-sealable thermoplastic fittings has been devised.

According to the present invention there is provided a method of manufacture of tubular fittings for heat sealing to a pipe or pipe parts, comprising the steps of anchoring one end of a length of resistance wire to a tubular preform of thermoplastic material, heating said resistance wire and applying it whilst hot to form a helical winding on said tubular preform, anchoring the other end of said length of resistance wire to said preform and encapsulating said helical winding with a jacket of thermoplastic material.

A specific embodiment of the invention will now be described by way of example with reference to the accompanying drawings in which:—

Figures 1a and 1c show steps in the manufacture of a heat-sealable fitting; and

Figures 2a to 2c are illustrations of constructional features of a fitting made by the method of Figure 1.

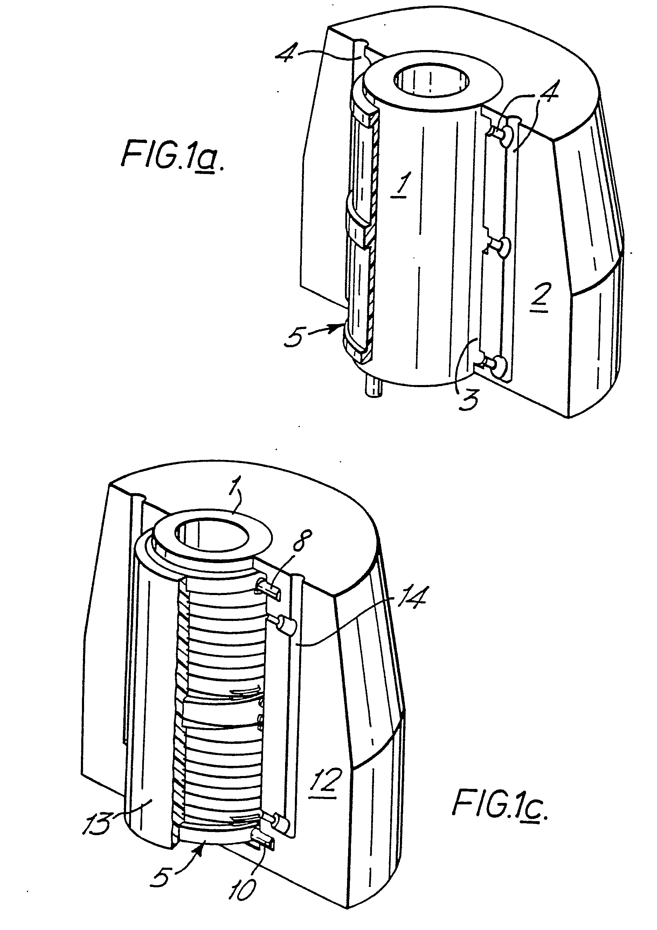

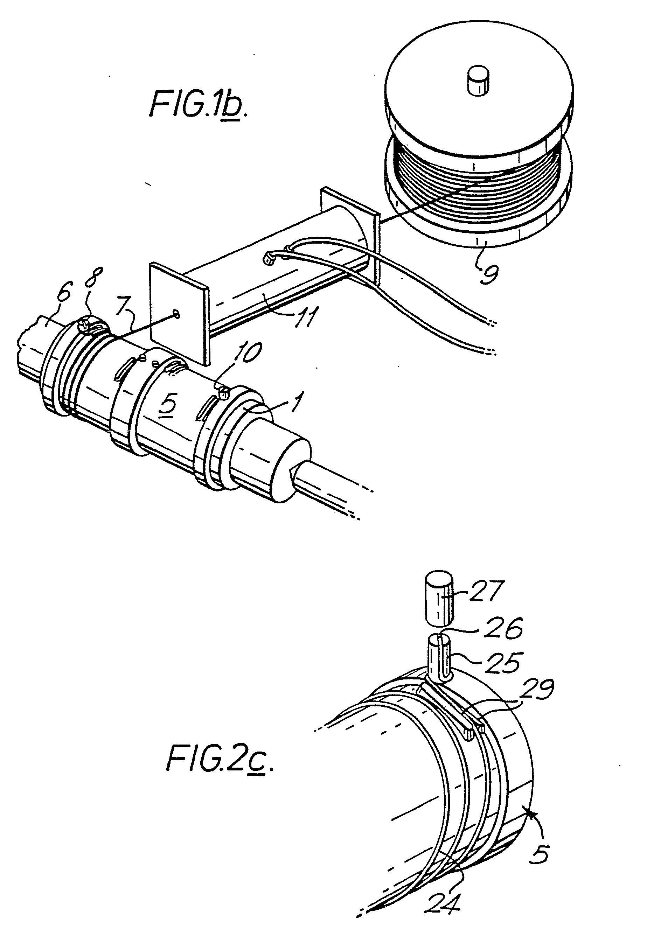

Referring now to Figures 1a to 1c of the drawings a cylindrical mandrel 1 is loaded into a two-part injection moulding tool 2 (only one part of which is shown). The moulding tool and mandrel cooperate to form a cavity 3 into which a thermoplastic material such as polyethylene, polybutylene or polypropylene is injected through channels 4 to produce a moulded preform 5. The mandrel 1 may comprise two or more components according to the shape and size of the preform 5 to be moulded. For example, at least two components will be required if an internal annular central stop is required to be moulded on the preform 5. After the injection moulding step, the moulding tool 2 is opened and the mandrel 1 bearing the preform 5 is mounted on a winding lathe 6. One end of a length of resistance heater wire 7 is attached to a terminal post 8 on the preform 5 and the mandrel rotated to form a helical winding on the preform. As the resistance wire is fed from a drum 9 it passes through a heater 11. When the winding is complete the other end of the heater wire 7 is attached to a second terminal post 10. The mandrel 1, bearing the preform 5 is removed from the lathe 6 and placed in a further two-part moulding tool 12 (Figure 1c). The heater winding is then encapsulated in a jacket 13 formed by injecting a further layer of thermoplastic material through channels 14. The complete mandrel and mouldings are removed from the injection tool 12 and allowed to cool. The completed fitting is then removed from the mandrel 1.

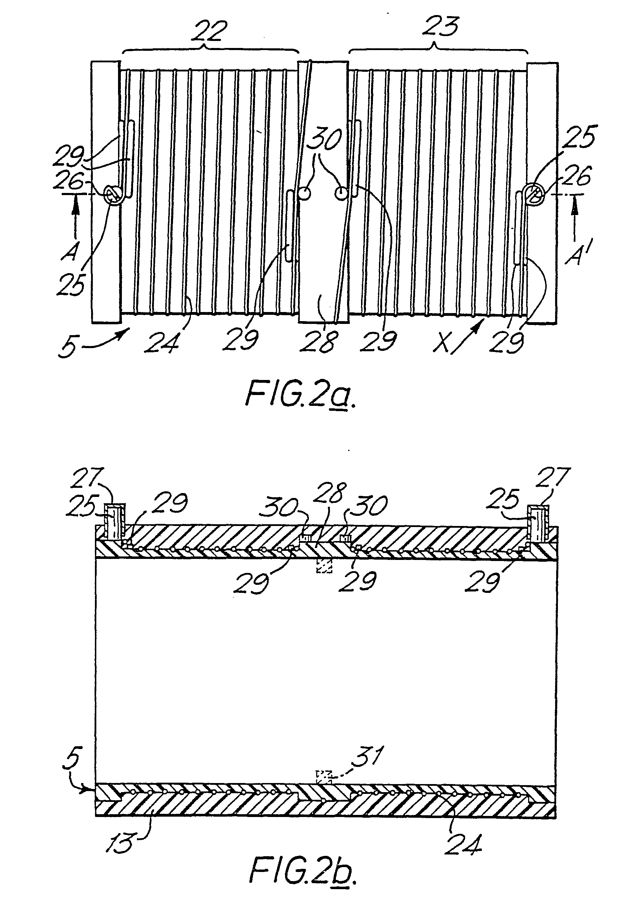

Features of the heat-sealable fitting are shown in greater detail in Figures 2a to 2c. Figure 2a is a plan view of the wire-wound preform 5 of a heat-sealable fitting. Figure 2b is a section taken along AA' of Figure 2a but including the encapsulating jacket 13, and Figure 2c is a scrap view in the direction X indicated on Figure 2a. The preform 5 has two sections 22,23 to carry the heater winding 24. Winding posts 25 with wire-locking slots 26 are provided to anchor the ends of the heater winding 24. Metal terminal caps 27 fit over the posts 25 and make electrical contact with the heater winding 24. A thicker middle portion 28 on the preform 5, separating the sections 22,23 has a wider spaced convolution of the heater winding so that it will not melt when power is applied. Guide ribs 29 and central locating pegs 30 position and hold the heater wire at a change of winding direction.

Variations of the method are within the ambit of the invention. For example, the resistance wire may be heated so that it simply softens the thermoplastic preform or it may be heated to a higher temperature so that it melts the preform forming a fillet which partially covers the wire. The tension created by contraction of the wire after cooling may be sufficient, or further stress may be applied by also stretching the wire prior to winding.

One or more stops 31 may be provided on the interior surface of the preform 5 (Figure 2b) so as to enable the ends of the pipes to be correctly located before joining. Also, means such as longitudinal ribs may be provided on the interior wall of the preform so as resiliently to grip the ends of the pipes prior to joining.

Futhermore, suitable visible heat-indicator means can be provided on the fitting whereby, in use, to indicate that a correct welding temperature has been attained for completing the welding of the fitting to the pipes.

## Claims

1. A method of manufacture of tubular fittings for heat sealing to a pipe or pipe parts comprising the steps of anchoring one end of a length of resistance wire (7) to a tubular preform (5) of thermoplastic material, heating said resistance wire and applying it whilst hot to form a helical winding on said tubular preform, anchoring the other end of said length of resistance wire to said preform and encapsulating said helical winding with a jacket (13) of thermoplastic material.

2. A method of manufacture of fittings as claimed in Claim 1, wherein the resistance wire is heated sufficiently to soften the thermoplastic preform when it is applied thereto.

3. A method of manufacture of fittings as claimed in Claim 2, wherein the resistance wire is heated sufficiently to melt the thermoplastic preform to form a fillet partially covering the surface of the resistance wire.

4. A method of manufacture of fittings as claimed in any one of the preceding claims including the further step of stretching the resistance wire prior to winding.

5. A fitting made by a method claimed in any one of the preceding claims.

6. A fitting as claimed in Claim 5 wherein the thermoplastic material of the preform is polyethylene.

7. A fitting as claimed in Claim 5 wherein the thermoplastic material of the preform is polypropylene.

8. A fitting as claimed in Claim 5, wherein the thermoplastic of the preform is polybutylene.

## Revendications

1. Procédé de fabrication de raccords tubulaires destinés à être thermoscellés un tuyau ou des parties de tuyau, comprenant les étapes qui consistent à ancrer une première extrémité d'une longueur de fil résistant (7) à une préforme tubulaire (5) en matière thermoplastique, à chauffer ledit fil résistant et à le poser pendant qu'il est chaud pour former en enroulement hélicoïdal sur ladite préforme tubulaire, à ancrer l'autre extrémité de ladite longueur de fil résistant à ladite préforme et à enrober ledit enroulement hélicoïdal d'une chemise (13) de matière thermoplastique.

2. Procédé de fabrication de raccords selon la revendication 1, dans lequel le fil résistant est chauffé suffisamment pour ramollir la préforme thermoplastique pendant qu'il est posé sur elle.

3. Procédé de fabrication de raccords selon la revendication 2, dans lequel le fil résistant est chauffé suffisamment pour faire fondre la préforme thermoplastique afin der former un congé recouvrant partiellement la surface du fil résistant.

4. Procédé de fabrication de raccords selon l'une quelconque des revendications précédentes, consistant en outre à étirer le fil résistant avant l'enroulement.

5. Raccord produit par le procédé selon l'une quelconque des revendications précédentes.

6. Raccord selon la revendication 5, dans lequel la matière thermoplastique de la préforme est du polyéthylène.

7. Raccord selon la revendication 5, dans lequel la matière thermoplastique de la préforme est du polypropylène.

8. Raccord selon la revendication 5, dans lequel la matière thermoplastique de la préforme est du polybutylène.

## Patentansprüche

1. Verfahren zur Herstellung von rohrförmigen Anschlußstücken fü das Heißabdichten an einem Rohr oder an Rohrteilen, gekennzeichnet durch die Verfahrensschritte des Verankerns des einen Endes einer Widerstandsdrahtlänge (7) an einem rohrförmigen Vorformling (5) aus thermoplastischem Material, des Erwärmens des Widerstandsdrahtes und Aufbringens desselben im heißen Zustand zur Bildung einer Schraubenwindung am rohrförmigen Vorformling, des Verankerns des anderen Endes der Widerstandsdrahtlänge am Vorformling und des Einkapselns der Schraubenwindung mit einer Hülse (13) aus thermoplastischem Material.

2. Verfahren nach Anspruch 1, dadurch gekennzeichnet, daß der Widerstandsdraht ausreichend erhitzt wird, um den thermoplastischen Vorformling zu erweichen, wenn ersterer auf letzteren aufgebracht wird.

3. Verfahren nach Anspruch 2, dadurch gekennzeichnet, daß der Widerstandsdraht ausreichend erhitzt wird, um den thermoplastischen Vorformling zu schmelzen und eine Hohlkehle zu bilden, die die Oberfläche des Widerstandsdrahtes teilweise abdeckt.

4. Verfahren nach einem der vorangehenden Ansprüche, gekennzeichnet durch den weiteren Verfahrensschritt des Reckens des Widerstandsdrahtes vor dem Wickeln.

5. Anschlußstück, hergestellt durch das Verfahren nach einem der vorangehenden Ansprüche.

6. Anschlußstück nach Anspruch 5, dadurch gekennzeichnet, daß das thermoplastische Material des Vorformlings Polyäthylen ist.

7. Anschlußstück nach Anspruch 5, dadurch gekennzeichnet, daß das thermoplastische Material des Vorformlings Polypropylen ist.

8. Anschlußstück nach Anspruch 5, dadurch gekennzeichnet, daß das thermoplastische Material des Vorformlings Polybutylen ist.

8. Anschlußstück nach Anspruch 5, dadurch gekennzeichnet, daß das thermoplastische Material des Vorformlings Polybutylen ist.

FIG.1a.

FIG.1c.

FIG.1b.

FIG.2c.

FIG.2*a*.

FIG.2*b*.